**Europäisches Patentamt**

**European Patent Office**

**Office européen des brevets**

(11) Veröffentlichungsnummer: **0 291 723**
**A1**

(12) # EUROPÄISCHE PATENTANMELDUNG

(21) Anmeldenummer: **88106486.9**

(22) Anmeldetag: **22.04.88**

(51) Int. Cl.4: **A01D 27/04 , A01D 25/04 , A01D 25/00**

(30) Priorität: **07.05.87 DE 3715139**

(43) Veröffentlichungstag der Anmeldung:
**23.11.88 Patentblatt 88/47**

(84) Benannte Vertragsstaaten:
**BE DE FR GB IT NL SE**

(71) Anmelder: **Franz Kleine Maschinenfabrik GmbH & Co.**
**Postfach 11 80**
**D-4796 Salzkotten(DE)**

Anmelder: **Hendlmeier, Konrad**
**Ehweg 1**
**D-8401 Untersanding(DE)**

(72) Erfinder: **Hendlmeier, Konrad**
**Ehweg 1**
**D-8401 Untersanding(DE)**
Erfinder: **Barkhausen, Johannes**
**Tiefer Weg 8**
**D-4796 Salzkotten-Upsprunge(DE)**
Erfinder: **Middel, Jan**
**Postfach 11 80**
**D-4796 Salzkotten(DE)**
Erfinder: **Romberg, Heinz-Werner, Dipl.-Ing.**
**Görresstrasse 35**
**D-4780 Lippstadt(DE)**
Erfinder: **Syring, Klemens**
**Bachstrasse 5**
**D-4796 Salzkotten-Thüle(DE)**

(74) Vertreter: **Wasmeier, Alfons et al**
**Patent Attorneys A. Wasmeier H. Graf**
**Postfach 382 Greflingerstrasse 7**
**D-8400 Regensburg 1(DE)**

(54) ## Maschine zum Ernten von Wurzelfrüchten.

(57) Bei einer Wurzelfrüchteerntemaschine sind Köpf-(10) und Putzereinheit (12), deren Rodewerkzeuge (19) heb- und/oder schwenkbar angeordnet sind, Roder-Reinigereinheit (27), die rotierende Schleudervorrichtungen (31) aufweist, und Nachreinigereinheit (4) auf einem als Querträger (5) ausgebildeten Zentralrahmen befestigt, der mit dem Maschinenrahmen (25) verbunden ist; die Haltestiele (21) der Rodewerkzeuge (19) sind über einen mit dem Querträger (5) befestigten Exzenterantrieb in einem mininalen Abstand zum Querträger angeordnet, der nur geringfügig größer als der Exzenterhub ist; die Schleudervorrichtung ist der Roder-Reinigereinheit so zugeordnet, daß sie die von den Rodeelementen (19) gelockerten Wurzelfrüchten direkt erfaßt und unmittelbar unter die Ableitvorrichtung der Rodeelemente fördert.

Fig.1

## Maschine zum Ernten von Wurzelfrüchten

Die Erfindung bezieht sich auf Maschinen nach dem Oberbegriff des Anspruches 1 und umfaßt sowohl einreihige als auch mehrreihige Erntemaschinen zum Roden von Wurzelfrüchten, insbes. Zuckerrüben.

Bei Rübenerntemaschinen, die an der Frontseite, der Heckseite oder seitlich am Zug- oder Trägerfährzeug, z.B. über Dreipunktaufhängung oder Parallelogrammführung, aufgenommen werden, kommt es entscheidend darauf an, ein Anbaugerät mit einer möglichst kurzen Baulänge und einem möglichst geringen, auf die beweglichen Teile des Rahmens wirkenden Moment zu - schaffen. Eine kurze und kompakte Bauweise und ein geringes Gewicht wird sowohl für gezogene als auch geschobene Rübenerntemaschinen angestrebt. Bekannte Rübenerntemaschinen haben den Nachteil relativ großer Länge und hohen Gewichtes sowie schlechter Steuerbarkeit, da der Maschinenrahmen die einzelnen Baueinheiten (Köpfer, Roder und Reiniger) im Abstand voneinander und unabhängig voneinander aufnimmt; beispielsweise beansprucht der Reiniger eine erhebliche Länge, da herkömmliche Reiniger, z.B. in Form von Siebsternen und nachgeschalteten Nachreinigern, wie z.B. Reinigungswalzen, einen hohen Platzbedarf in Fahrtrichtung haben und insbes. der Reinigungseffekt an den Rüben relativ gering ist. Des weiteren sind die einzelnen Einheiten mit gesonderten Baurahmen verbunden, was neben dem hohen Gewicht zu einer relativ großen Baulänge der gesamten Maschine führt.

Eine mehrreihige Rübenerntemaschine mit den Merkmalen des Oberbegriffes des Anspruches 1 ist beispielsweise aus der DE-OS 32 30 182 bekannt. Bei einer solchen Maschine ist jeder Scharstiel im rückwärtigen Bereich mit einem Rübenleitstab versehen, der die Rüben hochfördert. Oberhalb der Rübenleitstäbe ist ein Hubrad-Paar mit V-förmig zueinander angeordneten, sich oberhalb der Rodeelemente erstreckenden sowie jede gerodete Rübe erfassenden und zwischen sich schonend einklemmenden sowie unter beträchtlichem Höhengewinn nach hinten hochfördernden Hubrädern vorgesehen. Die Hubräder sind mit elasti schen Mitnehmern bzw. Fingern aus elastischem Werkstoff versehen; die einzelnen Mitnehmer bzw. Finger sind zumindest teilweise versteift. Jedes Hubrad-Paar erfaßt die Rüben und hebt sie im ein beträchtliches Maß über die Bodenebene hoch. Die Hubräder stehen mit rotierenden Auskämmelementen in Eingriff, die die hochgehobenen Rüben in Richtung auf die Reinigungsvorrichtung umlenken, welche vorzugsweise von einer Schneckenanlage gebildet ist. Das Hochheben der Rüben mit Hilfe der beiden Hubräder hat den Zweck, die Reinigungs- und Fördereinrichtung bzw. deren Schneckenwalzen mit größerem Abstand zum Boden und somit stets bodenkontaktlos halten zu können.

Aus der DE-OS 30 42 462 ist eine mehrreihige Rübenaushebevorrichtung bekannt, bei der sich an die Aushebeorgane ein angetriebenes, endloses Siebband anschließt. Die Aushebeorgane können durch einen angetriebenen Aufhängemechanismus in Schwingungen versetzt werden; des weiteren ist das Band auf-und abwärts beweglich angeordnet, um die Schüttelwirkung auf das Erntegut zu erhöhen und damit die Siebwirkung zu verbessern. Die Aushebeorgane werden z.B. durch einen Exzenterantrieb in eine im wesentlichen in Längsrichtung verlaufende Hin-und Herbewegung versetzt.

Aufgabe der Erfindung ist es, Erntemaschinen der gattungsgemäßen Art so auszubilden, daß sie bei möglichst geringem Gewicht eine möglichst kurze Baulänge haben, daß die auf die beweglichen Teile des Rahmens wirkenden Momente, die durch das Oszillieren der Scharstiele auftreten, möglichst klein sind, um Verformungen zu vermeiden, und daß sie bei der kompakten Bauweise bedienungs- und reparaturfreundlich ausgebildet sind.

Gemäß der Erfindung wird dies mit den Merkmalen des Kennzeichens des Anspruches 1 erreicht. Weitere Ausgestaltungen der Erfindung sind Gegenstand der Unteransprüche.

Mit der Erfindung wird ein besonders kompakter Aufbau einer Maschine zum Ernten von Wurzelfrüchten erzielt, die an der Front- oder Heckseite oder seitlich am Trägerfahrzeug angebaut ist und die aufgrund der kompakten Bauweise ein extrem niedri ges Gewicht und ein extrem kleines Moment ausübt. Im wesentlichen wird diese kompakte Bauweise dadurch erzielt, daß eine besonders zweckmäßige Reinigungsvorrichtung geschaffen wurde, daß ein Zentralrahmen verwendet wird, der die drei Bearbeitungseinheiten in Form eines Querträgers aufnimmt und der sicherstellt, daß der Abstand zwischen Exzentervorrichtung für das Oszillieren des Scharstieles und dem Scharstiel selbst ein Minimum ist, und daß aufgrund der Anheb- und/oder Schwenkbarkeit der Köpf- und Putzereinheit diese Einheit und die Scharbefestigung kompakt zusammengebaut werden können und trotzdem die Rodewerkzeuge zum Wechseln, Reparieren, etc. einwandfrei zugänglich sind.

Allen bekannten Methoden und Maschinen zum Reinigen der Wurzelfrüchte von anhaftendem, teilweise festgepreßtem Erdreich ist gemeinsam, daß die gerodeten Wurzelfrüchte bei mehrreihigen Erntemaschinen in mehreren parallelen Strängen einer gemeinsamen Reinigungsvorrichtung zugeführt werden, in der und auf dem Weg zu der die Wurzelfrüchte gesammelt und willkürlich und zufällig relativ zueinander und zur Reinigungsvorrichtung bewegt und gedreht werden. Wenn das mit den Wurzelfrüchten verbundene Erdreich, wie dies häufig der Fall ist, aufgrund der Konstruktion der Rodewerkzeuge extrem stark verdichtet ist, ist ein Reinigungseffekt, der darauf beruht, daß die Wurzelfrüchte sich gegeneinander oder gegen eine sich bewegende, z.B. aus Stäben gebildete Fläche reiben, relativ gering und demzufolge der Erdanteil an den an die Fabrik gelieferten Wurzelfrüchten sehr hoch.

Mit der Erfindung werden die Wurzelfrüchte einzeln nacheinander einem Reinigungsvorgang unterzogen, bei dem ein erheblich verbesserter Reinigungseffekt erzielt wird. Hierbei wird im Prinzip nachvollzogen, was früher bei manuellem Ernten (Stechen) von Rüben zum Entfernen des Erdanteiles an den Rüben praktiziert worden ist, nämlich zwei Rüben gegeneinander zu schlagen, damit das anhaftende Erdreich gelöst und entfernt wurde. Die Umsetzung dieses Vorganges in einem maschinellen Ablauf macht es erforderlich, daß jede einzelne Rübe unmittelbar beim Ausheben während des Rodevorganges erfaßt, beschleunigt und anschließend stark verzögert wird, so daß bei dieser starken Verzögerung die an den Wurzelfrüchten anhaftende Erde abfällt; dabei muß die Wurzelfrucht während der Beschleunigung gezielt so gerichtet sein, daß sie mit dem Kopf voraus auf eine Prallfläche auftrifft, damit sie nicht beschädigt und abgebrochen wird.

Hierzu werden die Rüben, die einzeln nacheinander durch das Rodewerkzeug im Boden gelockert, angehoben und auf den Leitstäben des Rodewerkzeuges nach hinten ansteigend aus dem Erdreich gehoben werden, bereits unmittelbar am Rodewerkzeug von einer rotierenden Fördervorrichtung erfaßt, die die Rüben einzeln nacheinander auf den Leitstäben geführt nach hinten oben bewegt und gegen eine Prallwand abschleudert. Die Transportgeschwindigkeit der Rüben und die Wucht des Abschleuderns werden dabei durch die Drehzahl der umlaufenden Fördervorrichtung, die einstellbar ist, bestimmt, so daß der Reinigungseffekt durch Änderung der Umlaufgeschwindigkeit des Förderers beeinflußt werden kann. Die Fördervorrichtung kann in Form eines Förderbandes, z.B. eines Zahnriemens, ausgebildet sein, dessen Ebene parallel schließend oder öffnend zur Ebene der Leitstäbe verläuft und das nach außen vorstehende Beschleunigungs- oder Schleudervorrichtungen oder dergl. besitzt. Die einzelnen Rüben werden dabei zwischen jeweils zwei benachbarten Beschleunigungs- oder Schleudervorrichtungen aufgenommen und geführt. Diese Beschleunigungs-oder Schleudervorrichtungen können beispielsweise aus einzelnen Stäben oder Armen bestehen, die vertikal oder im Winkel zur Förderbandoberfläche vom Förderer ausgehen, und die am freien Ende Beschleunigungs- oder Schleuderorgane für die Rüben aufweisen können, wobei z.B. jeweils zwei benachbarte Beschleunigungs- oder Schleuderorgane in Form von Fingern miteinander zusammenwirken, um eine auf den Leitstäben geführte Rübe in ihrer Lage mit dem Kopf voraus in Bewegungsrichtung auszurichten und zu erfassen. Die Anordnung kann dabei so gewählt werden, daß die jeweils miteinander zusammenwirkenden Finger zum Erfassen einer Rübe unter Vorspannung stehen, z.B. unter Wirkung einer Federkraft, die die Finger gegen die aufgenommene Rübe drückt.

Die bei der Übertragung von Oszillationen von der Exzentervorrichtung auf den Scharstiel auftretenden Momente sind so hoch, daß aufgrund der Wechselbelastung durch den Exzenterantrieb Verformungen in den jeweiligen Teilen des Rahmens auftreten; diese Verformungen können zu einem Bruch der entsprechenden Bauteile führen. Um möglichst kleine Eigenverwindungen und möglichst geringe Verformungen dieser Bauteile zu erreichen, wird mit der Erfindung vorgeschlagen, die beweglichen Teile zwischen Exzenter und Scharstiel mit möglichst kurzer Länge auszubilden und dabei den Exzenterantrieb mit dem Zentralrahmen zu kombinieren sowie den Zentralrahmen und den Scharstiel so nahe wie dies aufgrund des Exzenterhubes möglich ist zueinander anzuordnen, oder aber den Scharstiel innerhalb des Querträgers festzulegen. Auf diese Weise wird auch bei relativ hoher Frequenz des Exzenterantriebes eine Verformung der für die Übertragung der Exzenterwirkung benötigten Bauteile sicher und wirksam vermieden.

Der Exzenterbewegung zum Antrieb der Scharstiele kann eine zusätzliche Bewegung, z.B. eine horizontal wirkende Exzenterbewegung aufgegeben bzw. überlagert werden, damit die Scharstiele insgesamt eine Taumelbewegung relativ zum Hauptrahmen ausführen. Des weiteren können die Scharstiele und die Ableitstäbe, die in ihrer Gesamtheit einen Förderkorb ausbilden, fremderregt ausgeführt werden, z.B. mittels Vibratorantrieb, über Hydraulikantrieb, Elektroantrieb oder dergl.

Nachstehend wird die Erfindung in Verbindung mit der Zeichnung anhand von Ausführungsbeispielen erläutert. Es zeigt:

Fig. 1 eine schematische Darstellung der gesamten Maschine nach der Erfindung,

Fig. 2 in vergrößertem Maßstab die Köpf- und Putzereinheit in seitlicher Ansicht,

Fig. 3 die Fördervorrichtung der Roder-Reinigereinheit in Verbindung mit dem Scharstiel in Seitenansicht,

Fig. 4 die Fördervorrichtung der Roder-Reinigereinheit in Verbindung mit dem Scharstiel in einer Ansicht von vorne,

Fig. 5 eine weitere Ausführungsform der Fördervorrichtung nach Fig. 3,

Fig. 6 eine Detaildarstellung der Fingeranordnung in Verbindung mit der Fördervorrichtung,

Fig. 7 eine abgeänderte Ausführungsform einer Fingeranordnung,

Fig. 8 eine weitere Ausführungsform der Fingeranordnung,

Fig. 9 eine weitere, abgeänderte Ausführungsform der Fingeranordnung am Abförderrad in Verbindung mit dem Rodewerkzeug,

Fig. 10 den Aufbau des Zentralrahmens in seitlicher Darstellung, und

Fig. 11 eine Prinzipdarstellung der Leitstäbe und der Beschleunigungsorgane in Aufsicht.

Die Rübenerntemaschine 1 besteht aus einer Köpf- und Putzereinheit 2, einer Roder-Reinigereinheit 3, einer Nachreinigereinheit 4, einem die Einheiten 2, 3 und 4 aufnehmenden Zentralrahmen 5 und einem diesen tragenden Maschinenrahmen 6. Der Maschinenrahmen 6 ist auf einem Stützrad 7 verfahrbar und/oder wird von einem mit 8 - schematisch angedeuteten Schlepper über dessen Dreipunktaufhängung 9 getragen.

Die Köpf- und Putzereinheit 2 weist in herkömmlicher Weise eine rotierende Häckslerwelle 10 mit radial auf der Welle befestigten Metallmessern 11 und eine rotierende Putzerwelle 12 mit radial von der Welle ausgehenden Putzschaufeln oder -flügeln 13 aus Kunststoff, Gummi oder dergl. Material auf. Der Achsabstand der beiden Vorrichtungen 10, 12 ist kleiner als die Summe ihrer beiden Radien; die Messer 11 und die Schaufeln 13 rotieren in gleicher oder entgegengesetzter Richtung und sind in Umlaufrichtung gegeneinander versetzt, z.B. in einem Winkel von 5 -50°, so daß die rotierenden Elemente 11 und 13 nicht in Berührung miteinander kommen und sich damit nicht behindern oder beschädigen können. Zusätzlich besitzt die Einhet 2 in bekannter Weise ein bewegliches Nachköpfermesser 14 und eine Abfördervorrichtung für das geköpfte Gut. Die Einheit 2 ist über ein Bodenrad 15 höhenverstellbar in bezug auf die Rüben R ausgebildet. Die Elemente der Einheit 2 sind in einem Gehäuse 16 untergebracht, das über einen Parallelogrammlenker 17 mit dem Zentralrahmen 5 befestigt und z.B. veritkal verstellbar, herausschwenkbar oder in einer vertikalen Ebene hochklappbar ist, wie dies mit Pfeil 18 dargestellt ist.

Die Roder-Reinigereinheit 3 umfaßt die Rodewerkzeuge 19, z.B. herkömmliche Rodeschare oder spezielle stabförmige Rodeelemente, wie sie Gegenstand der DE-PS 32 37 249 sind. Den Rodewerkzeugen sind Leitstäbe 20 zugeordnet, die die Rüben nach dem Lockern und Herausheben aus dem Boden nach hinten der Nachreinigereinheit 4 zuführen. Die Rodewerkzeuge 19 sind an Scharstielen 21 befestigt, deren oberes Ende mit einem Gelenk 22 verbunden ist, das von einer angetriebenen, rotierenden Exzenterwelle 23 beaufschlagt und in Rüttelbewegungen versetzt wird. Die Exzenterwelle sitzt auf dem Zentralrahmen 5, auf dessen Unterseite ein Gelenk 24 angeflanscht ist, das an den Scharstiel 21 angebunden ist. Der Scharstiel 21 ist damit an zwei im Abstand voneinander angeordneten Stellen mit am Zentralrahmen befestigten Gelenken so verbunden, daß er vom Zentralrahmen einen minimalen, möglichst geringen Abstand aufweist, der im wesentlichen durch den Exzenterhub des Exzenters 23 bestimmt ist; z.B. beträgt bei bekannten Anordnungen der Abstand mehr als das 20-fache, während bei der Erfindung vorzugsweise ein Bereich zwischen dem 1 - 10fachen angewendet wird.

Der Zentralrahmen 5 ist als Querträger vorzugsweise mit Kastenprofil ausgebildet; er nimmt die drei Abschnitte 2, 3 und 4 auf und ist selbst mit dem Maschinenrahmen 6 in Form von Längsträgern 25 verbunden, die von der Dreipunktaufhängung 9 des Schleppers getragen werden. Z.B. kann der Maschinenrahmen 6 über Streben 26 auf dem Stützrad 7 ruhen.

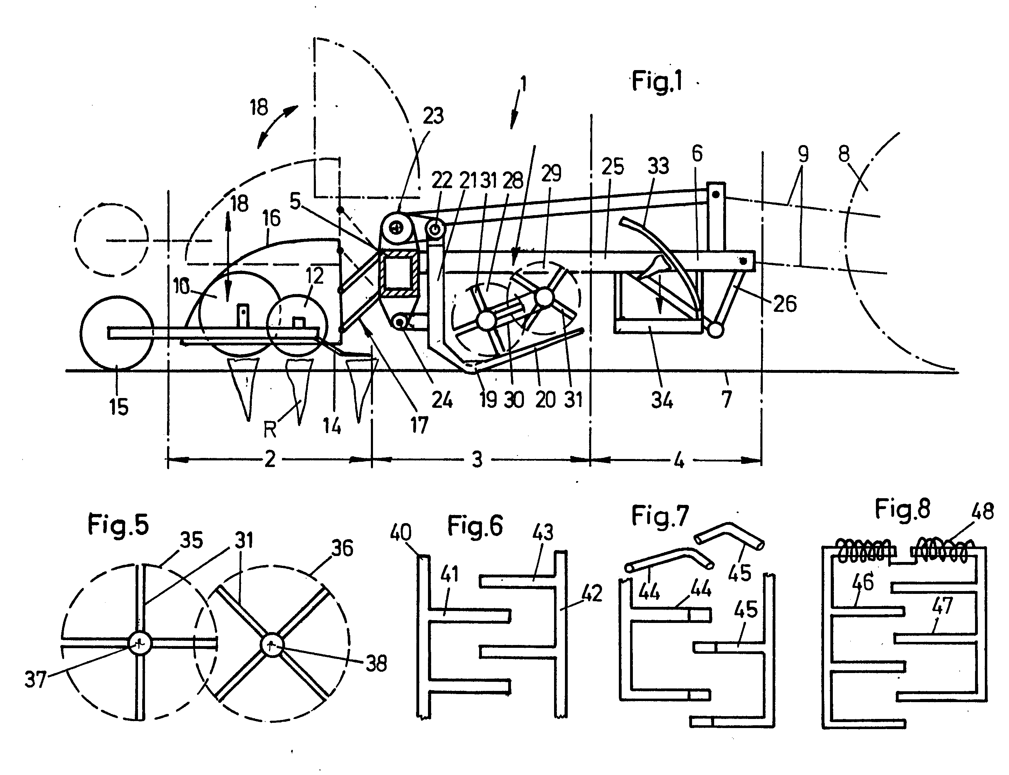

Die Nachreinigereinheit 4 besteht bei der in Fig. 1 dargestellten Ausführungsform aus einem Förderer 27, der mit nach außen verlaufenden Beschleunigungs- oder Schleudervorrichtungen 31 besetzt ist. Die Neigung des Förderers 27 ist der Neigung der Leitstäbe 20 entsprechend gewählt, derart, daß die Umfangslinie der Beschleunigungs- oder Schleudervorrichtungen 31 in dem dem Rodewerkzeug 19 zugewandten Abschnitt nur einem geringen Abstand von dem Werkzeug 19 bzw. den Leitstäben 20 aufweist. Die vom Werkzeug 19 aus dem Erdreich an- und ausgehobenen Rüben werden nacheinander von den Mitnehmern 31 der Bechleunigungs-oder Schleudervorrichtungen an den Leitstäben 20 geführt mitgenommen. Diese Mitnehmer weisen jeweils eine z.B. parabelförmige Aussparung 32 auf, die den Transport der Rübe zwischen zwei benachbarten Schaufeln nicht behindert, jedoch sicherstellt, daß nur wenig Erdreich mittransportiert wird. Die Rüben werden am Ende der Leitstäbe einzeln nacheinander mit mindestens der Umlaufgeschwindigkeit gegen eine z.B. aus gebogenen Stäben 33 gebildete Prallwand abgeschleudert und fallen auf eine Fördervorrichtung 34, die die Rüben z.B. seitlich aus der Maschine ausbringt. Diese Geschwindigkeit ist variabel, so daß sie entsprechend dem Verschmutzungsgrad der Rüben eingestellt werden kann.

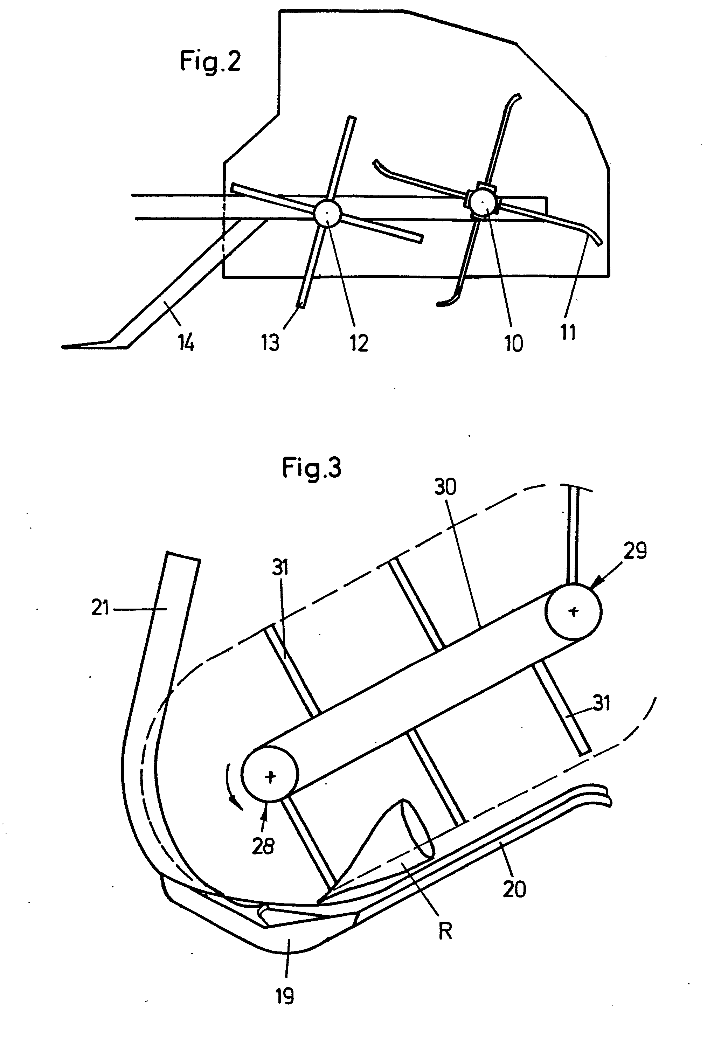

Bei einer abgeänderten Ausführungsform der Erfindung nach Fig. 5 sind anstelle eines umlaufenden Förderers 27 zwei Transporträder 35, 36 vorgesehen, die auf ihren angetriebenen Wellen 37, 38 sternförmig angeordnete Mitnehmer 31 aufweisen, welche analog den Mitnehmern 31 nach Fig. 3 den Abtransport der Rüben von den Leitstäben 20 bewirken. Der Abstand der beiden Wellen 37 und 38 kann dabei zur Verringerung der Baulänge kleiner sein als die Summe der Radien der beiden Transporträder, wobei in diesem Fall die Mitnehmer 31 in Umfangsrichtung so gegeneinander versetzt sind, daß sie sich im Betrieb nicht behindern (Fig. 5).

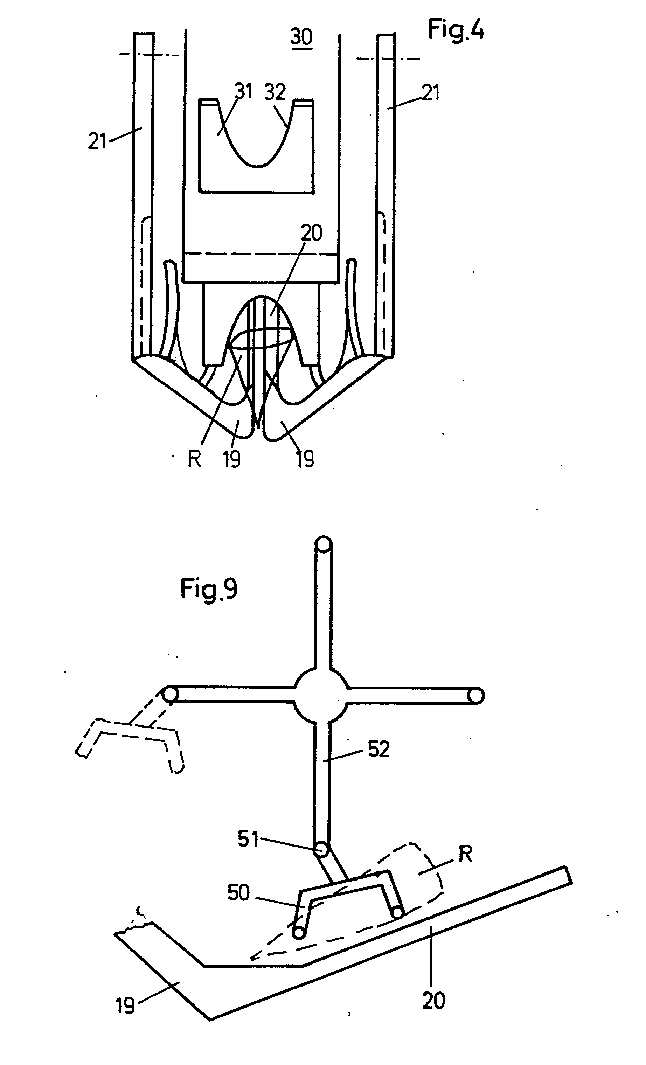

Die Mitnehmer 31 bzw. 41, 43 sind vorzugsweise als Greifelemente ausgebildet, die z.B. die in den Fig. 6, 7 und 8 dargestellte Form haben können. So weisen nach Fig. 6 die Arme 40 Fingerelemente 41 und die Arme 42 Fingerelemente 43 auf, wobei die Fingerelemente 41 und 43 gegeneinander versetzt sind und ineinander greifen, und wobei jeweils Paare von Fingerelementen miteinander zur Aufnahme einer Wurzelfrucht zusammenwirken. Die fingerartigen Elemente 44 und 45 nach Fig. 7 sind gekrümmt ausgebildet, wodurch die Aufnahme der Wurzelfrüchte zwischen jeweils zwei benachbarten, miteinander zusammenwirkenden Fingern erleichtert wird, da die Wurzelfrüchte von den abgewinkelten Fingern leichter umschlossen werden können. Eine Anordnung nach den Fig. 7 und 8 hat den Vorteil, daß die Wurzelfrüchte je nach ihrem Druchmesser an unterschiedlicher Stelle erfaßt und transportiert werden können. Wie in Fig. 8 schematisch dargestellt, sind die Finger 46, 47 im Abstand zueinander verstellbar, z.B. mittels Federn 48, so daß auf die Finger ein entsprechender Druck ausgeübt wird, durch den die Wurzelfrüchte einwandfrei festgehalten werden. Bei der Ausführungsform nach Fig. 9 ist am Ende eines jeden Armes ein Greifelement 50 etwa U-förmiger oder V-förmiger-Gestalt über ein Gelenk 51 mit dem jeweiligen Arm 52 befestigt. Die Rübe R wird dabei von dem U-oder V-förmigen Element erfaßt und längs des Rodewerkzeuges 19 bzw. der Leitstäbe 20 transportiert, wobei der Abstand der beiden Schenkel des U oder Vz.B. einem Rübendurchmesser etwa in der Rübenmitte entspricht und das U- oder V-förmige Element sich bis zum Eingriff über die Rübe schiebt und die Rübe dann mitnimmt.

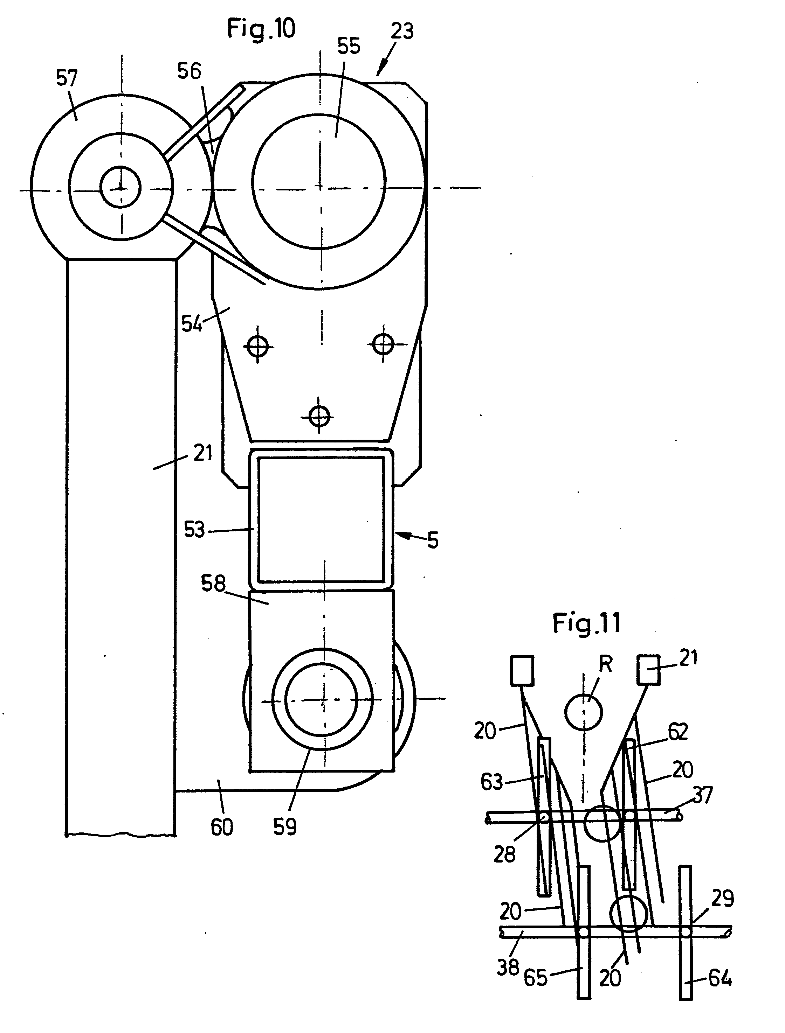

In Fig. 10 ist der Querträger 5 im einzelnen dargestellt. Auf einem Profilrahmen-Querträger 53 ist über einen Flansch 54 die Exzenteranordnung 23 befestigt, die eine exzentrisch umlaufende Welle 55 aufweist, welche den Exzenterantrieb über einen Flansch 56 auf ein Lager 57 überträgt, das unmittelbar mit dem oberen Ende des Scharstieles 21 befestigt ist. Auf der Unterseite des Längsträgers 53 ist ein Lagerbock 58 mit Lagerung 59 befestigt, der über eine Strebe 60 mit dem Scharstiel 21 starr verbunden ist. Der Exzenter 23 überträgt auf die Lagerung 57 und damit dem Scharstiel 21 eine durch die Exzentrizität bewirkte Rüttelbewegung, die über den Lagerstiel 21 auf das Werkzeug 19 und die Leitstäbe übertragen wird.

Fig. 11 zeigt eine schematische Aufsicht auf eine Anordnung entsprechend der nach Fig. 5, wobei die Mitnehmer 31 mit 62 und 63 auf der Achse 37 und mit 64 und 65 auf der Achse 38 bezeichnet sind, und wobei die darunterliegenden Leitstäbe 20, die an den Scharstielen 21 befestigt sind, in einem spitzen Winkel von z.B. 2- 30°, vorzugsweise etwa 5 - 10° zur Richtung der Maschinenlängsachse schräg verlaufend angeordnet sind. Diese schräge Anordnung der Leitstäbe 20 hat die Aufgabe, zu verhindern, daß die zwischen jeweils zwei benachbarten, auf der gleichen Achse angeordneten Transporträdern hindurchwandernden Rüben auf das zwischen diese beiden Transporträder eingreifende Transportrad der nachfolgenden Achse 38, d.h. auf Lücke auftreffen und damit in ihrem Fluß behindert werden. Die schräg gestellten Leitstäbe bewirken eine Führung der Rübe zwischen dem Mitnehmer 62 und dem Mitnehmer 65 und damit einen einwandfreien Bewegungsfluß. Der Winkel ß, um den die Leitstäbe gegenüber der Maschinenlängsachse geneigt angeordnet sind, hängt dabei von der Geometrie der Transporträder bzw. Mitnehmer und von deren Achsabstand ab.

## Ansprüche

1. Maschine zum Ernten von Wurzelfrüchten, insbes. Zuckerrüben, bestehend aus einer Köpf- und Putzereinheit, einer Roder-Reinigereinheit und einer Nachreinigereinheit sowie einem diese Einheiten aufnehmenden Maschinenrahmen, der mit einem Schlepperfahrzeug befestigt ist, wobei die einzelnen Einheiten vom Schlepperfahrzeug aus angetrieben sind, **gekennzeichnet durch** die Kombination folgender Merkmale

a) die Roder-Reinigereinheit (3) weist eine oder mehrere rotierende Beschleunigungs- oder Schleudervorrichtungen (28, 29) auf, die die einzelnen gerodeten, etwa vertikal stehenden, gelockerten Wurzelfrüchte (R) nacheinander erfassen, die Wurzelfrüchte gezielt mit dem Kopf voraus in die Ebene einer Ableitvorrichtung (20) umlegen, an der Ableitvorrichtung gezielt gegen eine Prallwand (33) schleudern, von der die so gereinigten Wurzelfrüchte auf eine Abfördervorrichtung (34) fallen,

b) die Köpf- und Putzereinheit (2), die Roder-Reinigereinheit (3) und die Nachreinigereinheit (4) sind auf einem als Querträger (5) ausgebildeten Zentralrahmen (5) befestigt, der mit dem Maschinenrahmen (25) verbunden ist und der zwischen Köpf- und Putzereinheit (2) und Roder-Reinigereinheit (3) so angeordnet ist, daß er das vordere Ende des Maschinenrahmens bildet,

c) die Haltestelle (21) der Rodewerkzeuge (19) sind über einen auf der Oberseite des Querträgers (5) befestigten Exzenterantrieb (23) und über ein auf der Unterseite des Querträgers (5) befestigtes Gelenk (24) in einem solchen minimalen Abstand zum Querträger angeordnet, daß der Abstand Querträger - Haltestiel (5 - 21) nur geringfügig größer ist als der Exzenterhub.

2. Maschine nach Anspruch 1, dadurch gekennzeichnet, daß die Beschleunigungs- oder Schleudervorrichtung (28, 29) mehrere miteinander zusammenwirkende Trommeln (35, 36) aufweist, auf deren Umfang Schaufeln, Paddel oder dergl. strahlenförmig angeordnete Mitnehmer (31) aus flexiblem Material mit rundem oder ovalem Querschnitt befestigt sind, die zusammen mit den Trommeln (37, 38) rotieren, daß die Mitnehmer oder dergl. (31) mit gleicher oder unterschiedlicher Drehzahl, aber gegeneinander so versetzt umlaufen, daß sie ineinandergreifen können die Wurzelfrüchte (R) von der einen auf die nachfolgende Trommel übergeben und von letzterer abgeschleudert werden, und daß der Achsabstand der beiden Trommeln (37, 38) kleiner, gleich oder größer ist als die Summe der Radien der Umfangskreise (35, 36) der Mitnehmer der beiden Trommeln.

3. Maschine nach Anspruch 1, dadurch gekennzeichnet, daß die Beschleunigungs- oder Schleudervorrichtung (28, 29) eine Anordnung aus zwei im Abstand voneinander angeordneten, mittels Riemen, Gitterband oder dergl. (30) miteinander verbundenen, umlaufenden Trommeln (28, 29) aufweist, die mit nach außen verlaufenden Schaufeln, Paddeln oder dergl. Mitnehmern (31) bestückt sind, daß die erste Trommel (28) über dem Rodewerkzeug (19) angeordnet ist, daß die Tangente der Umfangskreise des ersten und des zweiten Trommelkreises parallel zur Ebene der Ableitstäbe angeordnet ist, und daß die Mitnehmer (31) so ausgebildet sind, daß sie im unteren Abschnitt der Beschleunigungs- oder Schleudervorrichtung (28, 29) bis nahe an die Ableitfläche (20) reichen, begrenzt flexibel sind und mit einstellbarer Drehzahl rotieren.

4. Maschine nach einem der Ansprüche 1 - 3, dadurch gekennzeichnet, daß die Beschleunigungs- oder Schleudervorrichtung (28, 29) am Greifende, d.h. am Ende der Mitnehmer (31), Greifelemente (44, 45; 46, 47; 50) aufweist, die so ausgebildet sind, daß sie die einzelne Wurzelfrucht (R) in ihrer vertikalen Position im Zuge der Drehung der Mitnehmer in die schräge Position der Ableitvorrichtung (20) umlegen und zum Abschleudern in dieser Richtung gegen die Prallwand (33) freigeben.

5. Maschine nach Anspruch 4, dadurch gekennzeichnet, daß die Greifelemente gelenkig angeordnete Formteile (50) sind, die an in Richtung der Längsachse versetzten unterschiedlichen Stellen der Wurzelfrucht angreifen und die in der Abschleuderrichtung der Wurzelfrucht frei sind.

6. Maschine nach Anspruch 4, dadurch gekennzeichnet, daß die Greifelemente (50) fingerartige Elemente sind, die an der Wurzelfrucht zu beiden Seiten einer quer zur Längsachse der Wurzelfrucht liegenden Ebene angreifen, und daß mindestens ein Paar von Fingerelementen (44, 45; 46, 47) im Abstand voneinander übereinander vorgesehen sind, die die Wurzelfrucht definiert festhalten.

7. Maschine nach Anspruch 6, dadurch gekennzeichnet, daß die Finger (44, 45; 46, 47) jeweils eines Paares in Richtung der Längsachse der Wurzelfrucht gegeneinander versetzt sind.

8. Maschine nach Anspruch 6 oder 7, dadurch gekennzeichnet, daß die Finger (44, 45) abgewinkelt sind.

9. Maschine nach einem der Ansprüche 4 bis 8, dadurch gekennzeichnet, daß die Finger (44, 45; 46, 47) einen elastischen Schutzüberzug aufweisen.

10. Maschine nach einem der Ansprüche 4 bis 9, dadurch gekennzeichnet, daß die Finger (46, 47) jewels eines Paares im Abstand zeuinander verstellbar sind.

11. Maschine nach Anspruch 10, dadurch gekennzeichnet, daß die Verstellung durch Federn (48) erfolgt.

12. Maschine nach Anspruch 10 oder 11, dadurch gekennzeichnet, dáß alle Finger (46, 47) auf der einen und auf der entgegengesetzten Seite jeweils durch einen stabförmigen Träger miteinander verbunden sind, und daß beide Träger durch Federkraft (48) gegeneinander vorgespannt sind.

13. Maschine nach Anspruch 1, dadurch gekennzeichnet, daß der Querträger (5) ein Profilträger ist, der seitlich direkt oder über den Maschinenrahmen (25) mit der Dreipunktaufhängung (9) des Schlepperfahrzeuges (8) befestigt ist.

14. Maschine nach Anspruch 1, dadurch gekennzeichnet, daß die Köpf- und Putzereinheit (2) mit Hilfe eines Parallelogrammlenkers (17) heb- bzw. schwenkbar befestigt ist.

15. Maschine nach Anspruch 1 oder 14, dadurch gekannzeichnet, daß die Häckselwelle (10) und die Putzerwelle (12) einen Achsabstand voneinander haben, der kleiner ist als die Summe der Radien beider rotierender Elemente.

16. Maschine nach einem der Ansprüche 14 oder 15, dadurch gekennzeichnet, daß die beiden in gleicher oder in entgegengesetzter Richtung rotierenden Elemente (11, 13) in Drehrichtung versetzt angeordnet sind, z.B. in einem Winkel von 5 - 40°, um eine Berührung der Blätter der rotierenden Elemente zu vermeiden.

17. Maschine nach einem der Ansprüche 1 - 4, dadurch gekennzeichnet, daß die Mittenachse der Leitstäbe der Ableitvorrichtung (20) unterhalb der Mittenachse der jeweiligen Beschleunigungs- oder Schleudervorrichtung (28, 29) verlaufend angeordnet ist, und daß die Leitstäbe einen spitzen Winkel mit der Längsachse der Maschine einschließen.

18. Maschine nach Anspruch 17, dadurch gekennzeichnet, daß die Mitnehmer der vorderen und der hinteren Trommeln der Beschleunigungs- oder Schleudervorrichtung (28, 29) in Richtung der Längsachse der Maschine so gegeneinander versetzt sind, daß die Verbindungslinie der beiden Achsen zweier zugeordneter Mitnehmer den gleichen Winkel zur Längsachse der Maschine einschließt wie die Leitstäbe.

19. Maschine nach einem der Ansprüche 1 - 4 sowie 17, 18, dadurch gekennzeichnet, daß die Stäbe der Ableitvorrichtung (20) etwa im Winkel von 90° von den Scharstielen (21) weg verlaufend mit den Scharstielen befestigt sind.

20. Maschine nach einem der Ansprüche 1 -4, dadurch gekennzeichnet, daß die Scharstiele (21) zusätzlich zum Exzenterantrieb (23) eine weitere, in etwa horizontaler Ebene wirkende Antriebsvorrichtung, z.B. eine Exzenterantriebsvorrichtung aufweisen, so daß die Scharstiele relativ zum Hauptrahmen insgesamt eine Taumelbewegung ausführen.

21. Maschine nach einem der Ansprüche 1 - 4, dadurch gekennzeichnet, daß Scharstiel (21), Rodeelement (19) und Ableitstäbe (20) fremderregt angetrieben sind, z.B. durch Vibratorantrieb, Hydraulikantrieb oder dergl.

Fig.1

18 23 1

22 21 31 28 29 25 33 6 9 8

18 16 5

12 26

10

15 R 14 17 24 19 30 20 31 34 7

2 3 4

Fig.5

35 31 36

37 38

Fig.6

40 43

41 42

Fig.7

45

44 44

45

Fig.8

48

46

47

0 291 723

Fig.2

14    13    12    10    11

Fig.3

30

29

31

21

28

31

R

20

19

0 291 723

Fig.4

Fig.9

Fig.10

Fig.11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 098 824 (DUTRIEUX) <br> * Seite 5, Absatz 5; Seite 6; Figuren 1-4 * | 1 | A 01 D 27/04 <br> A 01 D 25/00 <br> A 01 D 25/04 |
| A | | 13,14 | |
| | --- | | |
| Y | NL-A-8 101 276 (STEKETEE) <br> * Seiten 3-7; Figuren 1-13 * | 1 | |
| A | | 3,4,9, 17-19 | |
| | --- | | |
| A | FR-A-2 072 804 (VISSERS) <br> * Seite 3, Zeilen 15-38; Seiten 4-8; Figuren 1-6 * | 1,2,4 | |
| | --- | | |
| A | FR-A-2 464 630 (STOLL) <br> * Seiten 5-7; Figuren 1-3 * | 1-6 | |
| | --- | | |
| A | FR-A-2 552 299 (MATROT) <br> * Seite 3; Figur 1 * | 1,14 | |
| | --- | | |
| A | FR-A-2 365 286 (GORDEJUELA) <br> * Seiten 3-5; Figuren 1,2 * | 1,13,19 ,20,21 | **RECHERCHIERTE SACHGEBIETE (Int. Cl.4)** |
| | --- | | |
| A | FR-A-2 332 693 (STOLL) <br> * Seiten 10-13; Figuren 1-10 * | 1,4-8, 10-12, 17,18 | A 01 D |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 18-08-1988 | VERMANDER R.H. |

EPO FORM 1503 03.82 (P0403)